# EUROPEAN PATENT SPECIFICATION

(11) **EP 2 065 780 B1**
(45) Date of publication and mention of the grant of the patent: **28.12.2016**
(21) Application number: 07023305.1
(22) Date of filing: 30.11.2007
(51) Int. Cl.: G05F 1/575, H02M 3/07

(54) **Controlled charge pump arrangement and method of controlling a clocked charge pump**
Gesteuerte Ladungspumpenanordnung und Verfahren zur Steuerung einer getakteten Ladungspumpe
Ensemble de pompe à charge contrôlée et procédé pour le contrôle d'une pompe à charge synchronisée

(43) Date of publication of application: 03.06.2009
(73) Proprietor: ams AG, 8141 Unterpremstätten (AT)
(72) Inventor: Singnurkar, Pramod, 8052 Graz (AT)
(74) Representative: Epping - Hermann - Fischer

(56) References cited:
- EP-A- 0 540 948
- US-A- 5 959 853
- US-A1- 2006 017 491
- HAKKINEN J ET AL: "An integrated programmable low-noise charge pump" ELECTRONICS, CIRCUITS AND SYSTEMS, 1999. PROCEEDINGS OF ICECS '99. THE 6TH IEEE INTERNATIONAL CONFERENCE ON PAFOS, CYPRUS 5-8 SEPT. 1999, PISCATAWAY, NJ, USA,IEEE, US, vol. 1, 5 September 1999 (1999-09-05), pages 185-188, XP010361534 ISBN: 0-7803-5682-9

## Description

The present invention relates to an arrangement with a controlled charge pump and to a method for controlling a clocked charge pump.

Controlled charge pumps are known from EP 0540948 A, US 5,959,853 A and US 2006/017491 A1.

In a variety of applications charge pumps may be utilized to provide an output voltage higher than a supply voltage driving the clocked charge pump. For this purpose, a clocked charge pump comprises one or more capacitors which are charged to a specific voltage in a first clock phase. In a subsequent second clock phase, the charged capacitors are coupled to an output terminal providing the output voltage.

Depending on the circuitry of the charge pump, the output voltage can be higher than the external supply voltage applied to the charge pump. Some clocked charge pumps may also comprise some switching circuitry thereby achieving a higher flexibility and different output voltage modes. Of course, switch losses and current leakages of the charge pump should be considered when designing the size required to provide the desired output voltage. Furthermore, the current consumption of a load coupled to the output terminal of the clocked charge pump should be taken into account when choosing the capacitance of the respective capacitors. Clocked charge pumps normally provide an unregulated output voltage. The output voltage of a clocked charge pump can be regulated and particularly regulated to a value greater than an external supply voltage by driving some of the switches in the first phase of the clock cycle of the charge pump accordingly. For this purpose, a controller circuit may be coupled to the charge pump.

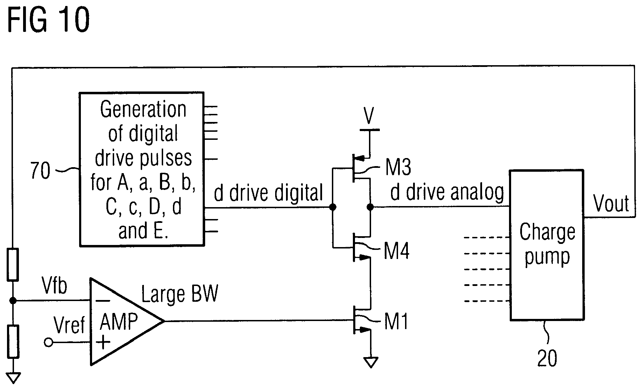

Figure 10 shows a clocked charge pump arrangement for providing a regulated output voltage. The clocked charge pump 20 comprises a plurality of control terminals, on which digital signals in response to a desired voltage output and in respect to the different phases of the clock cycle are applied. Further, on some control terminals are an analog signal is applied for driving the charge pump. The output voltage Vout of the charge pump is fed back to a differential amplifier AMP having a large bandwidth BW and compared to a reference voltage Vref. The output of the differential amplifier AMP is applied to a terminal of a transistor M1 coupled to a digital switch comprising two field-effect transistors M3 and M4.

In operation of the arrangement, the generation circuit 70 providing the digital drive pulses generates phase a digital control signal d during the first clock, thereby connecting terminal V to the respective control terminal of the charge pump. During a second phase of the clock cycle, also called a regulation phase, the digital control signal d is low, thereby closing transistor M3 while rendering transistor M4 conductive. Consequently, an analog signal applied to the charge pump 20 is now controlled by the output terminal of the amplifier AMP.

However, to provide a regulated constant output voltage with a high steady state, the bandwidth of the differential amplifier AMP should be at least twice the clock frequency since internal switches of the charge pump 20 may change operation modes at half the clock period. Practically, the bandwidth of differential amplifier AMP should be at least 10 times the clock frequency. Furthermore, the differential amplifier AMP should provide a large gain to reduce the steady state error between the reference voltage Vref and the feedback voltage VFB.

In the embodiment of FIG. 10, the steady state error of a controlled clocked charge pump is in the range of 4%. Nevertheless, there is a demand to further reduce the steady state error to provide a more constant output voltage.

This and further demands are met by the subject matter of the present independent claims. Further enhancements and embodiments are subject to dependent claims.

The invention provides a controlled charge pump arrangement, in which a proportional controller is improved by utilizing an additional integral controller for controlling the charge pump. The additional integral control action provides a combined control signal for the internal charge pump switches not only between the on and off states, but also allow operating the switches in a cut-off region, a saturation and a linear region. Accordingly, the integral control action provides a full linear controlling of the switches.

In an embodiment, a controlled charge pump arrangement comprises a clocked charge pump adapted to provide an output voltage and comprising at least one control input. A first feedback control circuit is coupled to the at least one control input and comprising a proportional signal transfer characteristic. A second feedback control circuit is also coupled to the at least one control input and comprises integrating signal transfer characteristics.

Preferably, first and second feedback control circuits are arranged in parallel, thereby providing respective control signals to the control input of the clocked charge pump. Both control signals can be combined into a single, preferably analogue control signal.

In a further embodiment, the second feedback control circuit can be activated, deactivated or even reset in response to a reset signal provided by a switching circuit. Accordingly the second feedback control circuit can be deactivated. Hence, the arrangement and particular the clocked charge pump is operated in P-control (proportional control) or PI-control (proportional, integral control) depending on the control signal provided by the switching circuit.

In a further embodiment, first feedback and second feedback control circuit are coupled to the respective control input terminal of the clocked charge pump via a switch, that switch being controlled by a digital controller. Consequently, both feedback circuits are disabled during one clock phase of the clock cycle driving the clocked charge pump. Such arrangement may improve the steady state behavior of the charge pump arrangement without affecting the response.

In a further embodiment, first and second feedback control circuits comprise a control path, a first terminal of each control path connected to a ground potential and a second terminal of each control path coupled to the at least one control input. In an embodiment, the controlled paths may be coupled to respective outputs of differential amplifiers, those amplifiers adapted to compare the output voltage of the clocked charge pump with a first reference voltage.

Particularly, the second feedback control circuit may comprise a differential amplifier and an additional capacitor connected to an output of the differential amplifier.

Preferably, the differential amplifier of the first feedback circuit comprises a larger bandwidth but a smaller gain than the differential amplifier of the second feedback circuit.

In another embodiment, a controlled charge pump arrangement comprises a clocked charge pump having a plurality of control inputs and adapted to provide an output signal in response to control signals at the control inputs. At least one of those control inputs is coupled to a control circuit that control circuit comprising a first controller and a second controller. The first controller is adapted to provide a first signal while the second controller is adapted to provide a second signal derived by a temporal integration of the error signal, wherein the error signal is derived by a comparison of the output signal with a reference signal.

The second controller may comprise a transistor to provide the second signal and a capacitor with an adjustable capacitance coupled to the transistor to adjust the integration time constant. Each of the first and second controllers may also comprise a comparator circuit being adapted to compare the output signal with a first reference signal. Of course, the respective xxx circuits may comprise a different bandwidth as well as different gains.

In an embodiment, the second controller may comprise a reset terminal to reset the second controller in response to a first control signal.

The control input of the charge pump may couple a capacitor of the charge pump to a respective supply terminal. Depending on a control signal provided by the first and second controller, the transistor may operate in a cut-off, a linear or a saturation region, connecting the supply voltage to the capacitor.

The clocked charge pump may also provide at least two different output voltage modes in response to control the signals at the control inputs.

The invention and several aspects thereof are now explained in greater detail together with accompanying drawings in which
- FIG. 1: shows an embodiment of a controlled charge pump arrangement,
- FIG. 2: shows a second embodiment of a controlled charge pump arrangement,
- FIG. 3: illustrates a clocked charge pump,
- FIG. 4: shows an embodiment of a differential amplifier used for proportional control,
- FIG. 5: illustrates a differential amplifier used for integral control,
- FIG. 6: illustrates a diagram showing the output voltage over time for a controlled charge pump arrangement according to an embodiment,
- FIG. 7: shows an embodiment of a capacitor arrangement with an adjustable capacitance,
- FIG. 8: illustrates the different control signals over a clock period,
- FIG. 9: illustrates the startup signals over a predetermined time span according to the embodiment of FIG. 2.

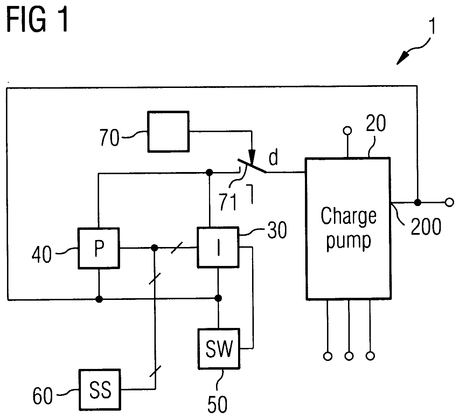

FIG. 1 shows an embodiment of a controlled charge pump arrangement comprising a charge pump 20 which will be explained in greater detail below. The charge pump 20 is implemented as a clocked charge pump having one or more capacitors which are charged during a first phase of a clock cycle and providing their charged storage at an output terminal 200 during a second phase of the clock cycle. The charge pump 20 comprises a plurality of control inputs on which digital signals are applied. Those digital signals control internal switches of the charge pump during the first and second clock phase. Furthermore, the charge pump comprises a clock input terminal for receiving an analog control signal. That analog control signal controls one or more switches in the clocked charge pump 20, thereby improving the steady state behavior of the charge pump. The control terminal of the charge pump 20 is connected to a switch 71 controlled by a first control circuit 70. Said control circuit provides a digital signal to the switch 71 as well as to several other switches implemented in the charge pump 20.

The switch 71 is connected to a first controller 40 and a second controller 30. The first controller 40 provides a control signal proportional to a first error signal, the first error signal derived by a comparison of the output voltage at terminal 200 of the charge pump 20 with a first reference voltage. The second controller 30 also provides a control signal, that control signal, however, derived by a temporal integration of a second error signal. The second error signal is also determined by a comparison between the output voltage at terminal 200 of the charge pump 20 and the reference voltage. Consequently, a control signal applied to the switch 71 is a combined control signal comprising a first proportional portion and a second integral portion. Both control portions are dependent from the output voltage of the charge pump.

The second controller 30 can be selectively deactivated or activated, thereby choosing whether to operate the charge pump in proportional control only or in proportional/integral control. For this purpose, the second controller 30 is coupled to a switching unit 50. The switching unit 50 also comprises an input terminal coupled to the output 200 of the charge pump 20. The switching unit 50 provides a reset or activation signal to the second controller 30 in response to the output voltage of the charge pump. The switching unit 50 can be used, for instance, during a startup procedure or a switching mode of operation of the charge pump. During such switching, a "peak overshoot" may occur in the control signal of the second controller due to its slow integral signal characteristics. When the second controller 30 is reset, the integral output signal is not added to the remaining control signal. The control signal only comprises the proportional output signal provided by the first controller 40. Hence, during a switching procedure of the charge pump, the charge pump 20 is controlled with the proportional controller only.

In addition, a startup circuit 60 may provide a corresponding startup signal for the first and second controller. That startup signal may be used to selectively activate or deactivate the first and second controller 40, 30 during the startup procedure of the charge pump. Until a specific output voltage is read or a predetermined time span expired, the startup circuit 60 selectively activates the first and second controller 30 and 40, respectively.

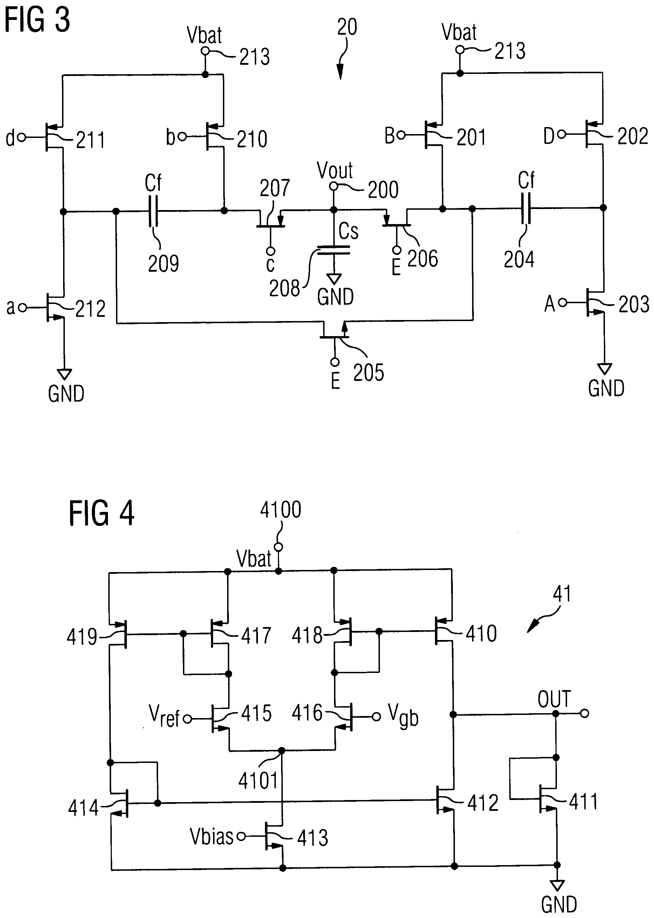

A more detailed view of the charge pump 20 including several switches on which the digital and analog signals are applied is illustrated in FIG. 3. In this embodiment, the charge pump 20 provides different modes of operation and is used for boosting an external supply voltage VBAT in response to several adjustment signals.

The charge pump 20 comprises two capacitors 209, 204 with a fixed capacitance Cf. A first terminal of the respective capacitors 209 and 204 is connected between respective switching transistors 211, 212 and 202, 203, respectively. The transistors 211 and 202 are connected to the supply voltage terminal 213 for providing the supply voltage Vbat. In accordance, the transistors 212, 203 are coupled with their second terminals to the ground potential GND.

The respective second terminals of the capacitors 209, 204 are connected to switching transistors 210 and 201, respectively. The switching transistors 210, 201 are also coupled to the common supply terminal 213. The second terminals of the capacitors 209, 204 are also coupled to respective output switching transistors 207 and 206. The respective second terminals of transistors 207, 206 are connected to a common output terminal 200 and to a storage capacitor 208 with capacitance Cs.

The charge pump 20 in this embodiment also comprises a switching transistor 205 for selecting different modes of operation and particularly different voltage modes. The switching transistor 205 is coupled with a first terminal to the first terminal of capacitor 209 and with its second terminal to the second terminal of capacitor 204. Depending on the mode of operation, the switch 205 is activated.

As mentioned before, the charge pump 20 can be used for boosting the supply voltage Vbat to an output voltage Vout, the output voltage being a factor 1.5 or 2 times higher than the input voltage Vbat. In a so-called "1.5 mode" of operation, the switches 210, 203 and the mode switch transistor 205 are set to "ON". This is achieved by applying a low logical level at the controlled terminal of transistor 210 while at the same time applying a high logical level at the respective gate terminals of transistors 205 and 203. All remaining switches are in "OFF" state. During this phase, both capacitors 209 and 204 are charged to the total supply voltage of Vbat. If the capacitors are matched approximately, an equal voltage drop across both capacitors is provided.

During the subsequent second clock phase, the transistors 210, 205 and 203 are deactivated and switches 211, 202, are activated as well as the output switches 207 and 206. The charge stored in the capacitors 209, 204 is now transferred to the storage capacitor 208 and a current is supplied to the output terminal 200. The output voltage at terminal 200 is about 1.5 times the supply voltage Vbat, also considering the load current at terminal 200, the switch resistance of the several transistors, the switching frequency as well as the node leakages.

In a second mode of operation, the operation switch transistor 205 is permanently deactivated. In this mode of operation, the output voltage at terminal 200 is about the factor of 2 times higher than the input voltage Vbat. During a first phase of the clock cycle, the switching transistors 210, 201 as well as 212, 203 are set to "ON", thereby charging each of the capacitors 209, 204 to the supply voltage Vbat. In the second clock phase of the cycle, the switches 210, 201, 212 and 203 are deactivated and switches 211, 202 as well as the output transistors 207, 206 become activated. The charge is transferred to capacitor 208 and to the output terminal 200.

The charge pump 20 according to the embodiment of FIG. 3 may provide an unregulated output voltage but can be regulated also to a value greater than Vbat by driving the transistors 211 and 202 additionally into saturation instead of operating the transistors in a linear region, only.

To improve the steady state behavior of the charge pump 20, the gate terminals of transistors 211 and 202 are driven with analog control signals comprising a proportional and an integral portion. In that case, both transistors may operate in any of three possible regions of operation, namely cut-off region, saturation and linear region. Depending on the region the output voltage is regulated and the steady state improved. The gates of the other transistors may be driven with digital pulses, thereby activating or deactivating the transistors selectively. In respect to the embodiment of FIG. 1, the proportional portion of the analog signal applied to the gate of transistor 211 is provided by the first controller 40.

The controller 40 compares the output voltage at terminal 200 with a reference voltage and provides a proportional error signal thereto. Accordingly, the bandwidth of the controller should be much larger than the switching frequency of the transistors in charge pump 20 to allow a fast response time while decreasing the steady state error. Further, the first controller 40 may be activated for all time for a fast response to any changes of the output voltage at terminal 200. For instance, a bandwidth of the first controller which is 10 times higher than the switching frequency of the charge ump transistors may be sufficient.

On the other hand, the second controller 30 providing an integral portion of the control signal for transistor 211 may comprise a much smaller bandwidth. Further, the second controller 30 may be selectively reset or deactivated, thereby allowing higher flexibility. Particularly, the second controller 30 may be reset during the time when the charge pump 20 switches from a first operating mode to a second operating mode, for instance from the 1.5 mode to the 2.0 mode. This may be required due to the fact that changes in the output voltage due to operating mode switching are much faster than the response time of controller 30, resulting in undesired overshoots of the control portion.

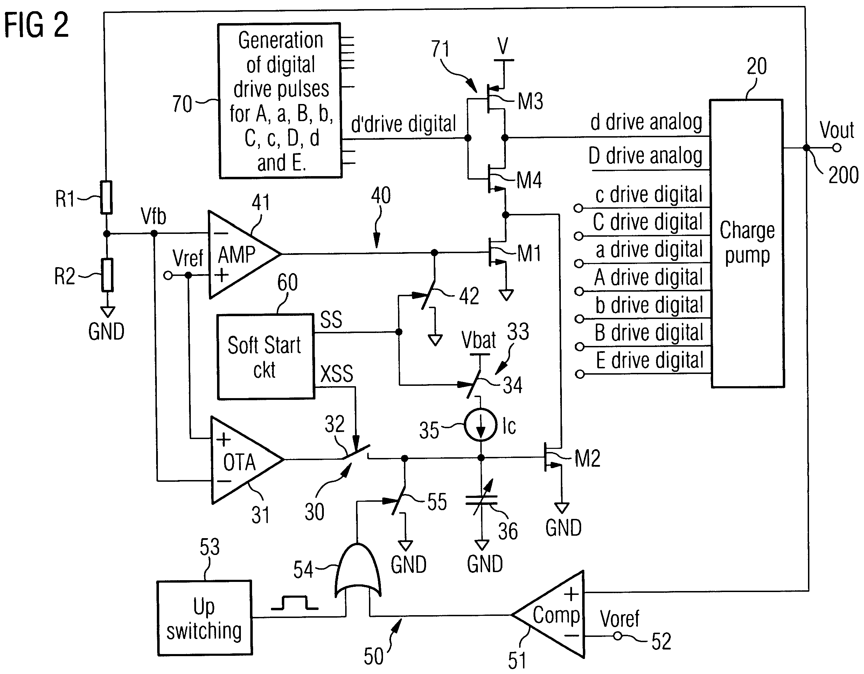

FIG. 2 shows an embodiment of a controlled charge pump arrangement with greater detail. In this respect, the first controller is arranged as the first feedback control circuit 40 having a differential amplifier 41 coupled with its output terminal to the gate terminal of control transistor M1. The second controller providing a second feedback control circuit 30 comprises a differential amplifier 31, coupled with its output to an adjustable capacitor 36 and to a gate of a second control transistor M2.

Particularly, the charge pump 20 comprises a plurality of control terminals, on which at two terminals an analog control signal can be applied. All other control terminals are connected to a digital control signal generator 70 as indicated in Figure 2. For convenient purposes, only the control circuitry for providing the d drive analog signal is illustrated in FIG. 2. Accordingly, a similar control circuit can be used to provide an analog control signal for switching transistor 202 according to the charge pump illustrated in FIG. 1 (D drive analog). The same control circuits for generating both control signals may also b used.

The control terminal of the charge pump 20 is connected to a node between the switching transistors M3 and M4. These switching transistors correspond to the switch 71. They are driven by a digital signal provided by the generation circuit 70. A terminal of transistor M3 is connected to a logical level terminal while the second terminal of transistor M4 is coupled to control transistor M1 of the first feedback control circuit and to transistor M2 being part of the second feedback control circuit.

The output terminal of the charge pump 20 is coupled to a first input terminal of respective amplifiers 41 and 31 of the first and second feedback control circuit 40 and 30, respectively. The differential amplifier 41 is implemented with a high bandwidth that is relatively low gain. Accordingly, the second differential amplifier 31 of the second feedback control circuit 30 comprises a smaller bandwidth but higher gain.

The output voltage of the charge pump is divided by a resistor network R1, R2 and compared with a reference voltage Vref by the amplifier 41 and 31. The error signal provided by the differential amplifier 41 is applied to the gate terminal of control transistor M1. The error signal of the differential amplifier 31 of the second feedback control circuit is used to charge the adjustable capacitor 36. Consequently, the voltage across the capacitor 36 controls the gate terminal of the second control transistor M2, thereby implementing an integral control.

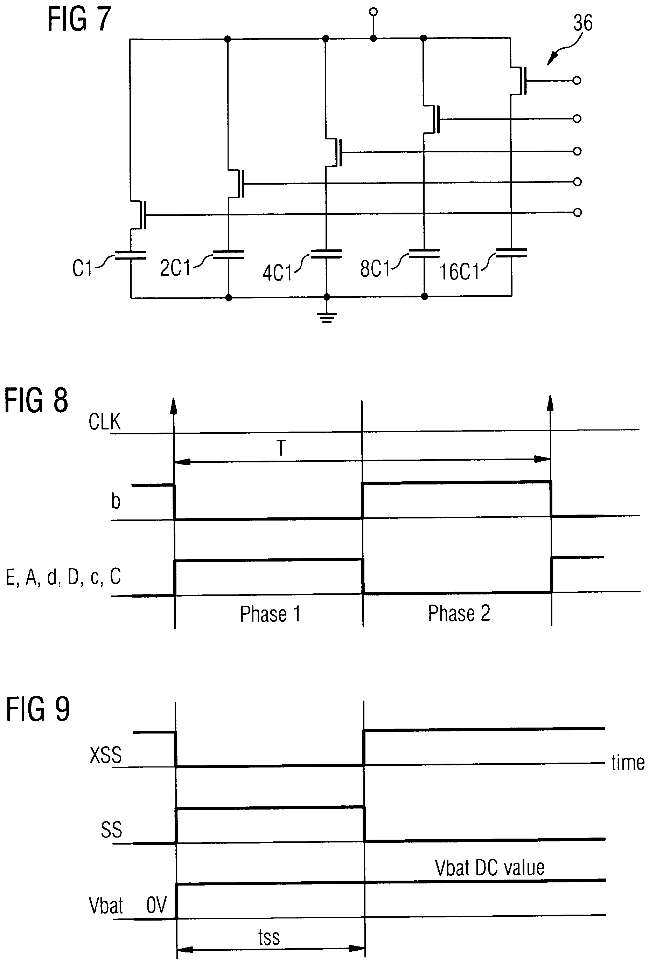

Depending on the clock phase of a clock cycle, one of the transistors M3 and M4 of the switch 71 is activated while the other one is deactivated. Accordingly, the first feedback control circuit 40 as well as the second feedback control circuit 30 is fully disabled during the time when transistor M4 is in the OFF state corresponding to the first phase of the clock cycle. Accordingly the digital signal d' provided by circuit 70 is "LOW", thereby connecting the signal V to the charge pump 20. Signal V is logic "HIGH". During the second phase of the clock cycle, the digital signal d' is high, connecting first and second feedback control circuits to the "drive d analog" terminal of the charge pump. The different digital signals controlling the clocked charge pump during operation are illustrated in FIG. 8. Still it should be noted that during phase 2 of the clock cycle, signals d and D are analog signals and not digital signals. Particularly they are controlled by the first and second feedback controller and driven in one of the three operation regions. All other signals are still digital signals.

The first feedback control circuit provides the first portion of the control signal, that portion proportional to an error signal derived by the comparison of the output voltage of the charge pump and the reference voltage. The second feedback control circuit 30 provides an integral portion of the control signal, that integral portion derived by the error signal and in dependence of the capacitance of the adjustable capacitor 36. The error signal is also derived by a comparison between the feedback voltage Vfb and the reference voltage Vref.

A controlled charge pump arrangement according to FIG. 2 also comprises a startup circuit 60 controlling a startup sequence for the arrangement. This may be required to reduce any peak overshot and start up time. The startup circuit 60 generates digital pulses SS and XSS during initialization of the charge pump and particularly during the time the output voltage Vout of the charge pump rises from zero to the final steady state value. The startup circuit is connected to a first switch 42 coupled to the gate of the switching transistor M1 of the first feedback control circuit and to the ground potential. Further, the startup circuit 60 is connected to a second switch 34 coupling the supply voltage 33 to a constant current source 35. The constant current source 35 is connected to the gate terminal of the control transistor M2 and to the adjustable capacitor 36 of the second feedback control circuit.

Furthermore, the startup circuit 60 is coupled to a second switch 32 arranged in the second feedback control circuit, and particularly connecting the output of the differential amplifier 31 to the gate terminal of controlled transistor M2. The switch 32 is controlled by the digital signal XSS while the digital pulse SS is applied to the switches 34 and 42, respectively. FIG. 9 shows a diagram illustrating the signals over time during the startup procedure. In the beginning, the signal XSS is low, thereby opening the switch 32, while digital pulse SS is at high level, closing the switch 42 and 34, respectively. Consequently, controlled transistor M1 of the first feedback control circuit is connected to ground level thereby turned off.

Because switch 32 is open, the differential amplifier 31 is disabled from the capacitor 36. The capacitor 36 is now charged by the current source 35 only, thereby controlling the transistor M2 of the second feedback circuit only with the current Ic. After a predetermined soft start time, the output voltage may reach a specific value, so that the startup circuit 60 may reset the digital pulses SS and XSS, respectively. Switch 32 is closed and current source 35 deactivated by opening switch 34. The differential amplifier 31 of the second feedback control circuit takes over the controlling of transistor M2. At the same time, switch 42 is opened, thereby activating a first feedback control circuit.

A further aspect of the controlled charge pump arrangement according to the embodiment shown in FIG. 2 relates to the switching behavior of the controlled charge pump. As mentioned earlier, the charge pump 20 is able to provide different output voltages in respect to the digital control signals applied thereto. During such switching procedure, the second feedback control circuit 30 may produce a peak overshot in the output due to its slower response time caused by its integrating signal transfer characteristics. Therefore, the controlled charge pump arrangement comprises an up-switching and reset circuit 50 comprising a pulse up-switching generation 53, a logic gate 54 and a comparator circuit 51. The output of the OR logic gate 54 is coupled to a switch 55 connecting the ground potential to the gate terminal of controlled transistor M2 in the second feedback control circuit. One input of the logic gate is connected to the up-switching circuit 53 while the other one is connected to the output of the comparator 51. The comparator compares the output voltage of the charge pump with a maximum output voltage reference Voref.

When the output voltage of the charge pump exceeds the reference voltage Voref, the comparator 51 generates a high level signal, thereby discharging the capacitor 36 of the second feedback control circuit. Discharging the capacitor may turn off the controlled transistor M2 momentarily, thereby deactivating the second feedback control circuit 30 and the integral controller.

In the embodiment, the reset circuit 50 is used to prevent peak overshot values in a continuous operation caused by the slower integral controller provided by the second feedback control circuit or during a switching procedure when the charge pump 20 selects a different mode of operation and a different output voltage. During such switching time, the up-switching circuit 53 generates a corresponding pulse for a predetermined short duration, thereby preventing an additional peak overshoot.

The following table illustrate the various modes of operation for the arrangement according to FIG. 2, showing which of the feedback control circuits 40, 30 are present and wherein Vth is the threshold voltage of transistor M2.

| | |
|---|---|
| Signal SS equals HIGH | Control. 30 is active |
| Switch 55 is open | Control. 40 is deactivated |
| Signal SS equals LOW | Control. 30 is deactivated |
| Switch 55 is closed | Control. 40 is active |
| Signal SS equals LOW | Control. 30 is active |
| Switch 55 is open | Control. 40 is active |
| Signal SS equals LOW | |
| Switch 55 is open | Control. 30 is deactivated |
| Voltage by source 35 smaller than Vth of transistor M2 | Control. 40 is active |
| Signal SS equals LOW | |
| Switch 55 is open | Controller 30 is active |
| Voltage by source 35 greater than Vth of transistor M2 | Controller 40 is active |

FIG. 4 shows an embodiment of a differential amplifier having a high bandwidth but relatively small gain. Such amplifier can be utilized, for instance, as the differential amplifier 41 in the first feedback control circuit to provide a proportional error signal.

The differential amplifier 41 comprises two input transistors 415, 416 for signals Vref and Vfb, both transistors connected to a common node 4101. The common node 4101 is coupled to a bias transistor 413 for biasing the differential amplifier.

The source terminals of both differential transistors 415, 416 are each connected to a load, each load comprising a transistor 417, 418 being part of a current mirror. Particularly, transistor 417 is arranged between the supply terminal 4100 and differential amplifier transistor 415.

The gate of the transistor 417 is connected to a gate of a current mirror transistor 419 and to a node between differential amplifier transistor and transistor 417. Accordingly, a node between transistor 418 and differential amplifier transistor 416 is coupled to the gates of transistors 418 and 410, respectively. The amplified differential signal applied to the inputs of the differential amplifier transistors 415 and 416 are mirrored in the transistors 419, 410.

The amplifier 41 comprises a further current mirror with transistors 414, 412 wherein the current provided by transistor 419 is mirrored in the current mirror transistor 414 connected between the ground potential and transistor 419. The transistor 412 of the current mirror is arranged between ground potential and the transistor 410. A node in-between is connected to the output terminal OUT. An additional output transistor 411 arranged between terminal OUT and the ground potential reduces the noise in the output signal.

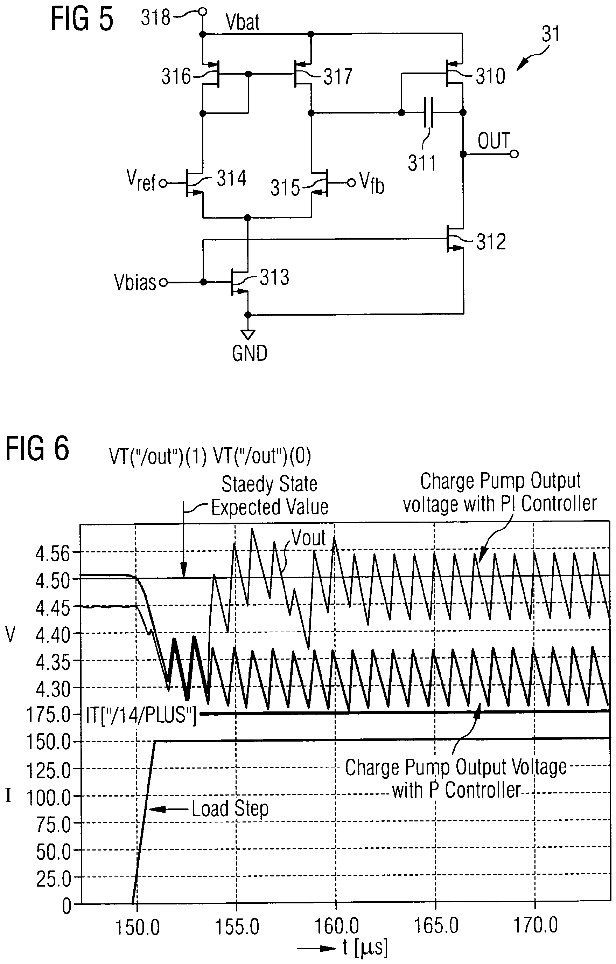

In contrast thereto, FIG. 5 shows an embodiment of an operational transconductance amplifier, utilized, for instance, as differential amplifier 31 in the controlled charge pump arrangement according to FIG. 2. An operational trans-conductance amplifier (OTA) is an amplifier whose differential input voltages produce an output current. Thus, it is also considered as a voltage controlled current source.

The amplifier is similar to the operational amplifier shown in FIG. 4 in that it has a high impedance differential input stage. The OTA amplifier 31 comprises two differential input transistors 314, 315 coupled to a common node and connected to a bias transistor 313. The other terminal of differential input transistor 314 is connected to the gates of load transistors 316, 317, each of them also coupled to one of the differential amplifier transistors 314, 315. An output node arranged between differential amplifier transistor 315 and load transistor 317 is connected to a capacitor 311 and to a gate terminal of an output transistor 310. The output transistor 310 with a second bias transistor 312 is connected in series between the supply potential terminal 318 and the ground potential terminal GND. The gate of the second bias transistor 312 is connected to the gate of the first bias transistor 313. Finally, an output node is arranged between the second bias transistor 312 and the current source transistor 310.

FIG. 7 shows an embodiment for a capacitor with an adjustable capacitance. The adjustable capacitor comprises a plurality of capacitors C1 to 16C1 arranged in parallel with different sizes as indicated. The capacitance differ by the factor of two and are therefore binary weighted. Each capacitor can be selectively switched on or off by a switching transistor coupled between a terminal of the respective capacitor C1 to 16 C1 and the terminal of the adjustable capacitor.

FIG. 6 shows a comparison of an output voltage for a regulated clocked charge pump over time. While the output current I is almost constant at 150 mA, the steady state error of the output voltage V at 4.5V vary in dependence of the controller. As illustrated a charge pump arrangement according to the embodiments of FIG. 1 and FIG. 2 comprises a smaller steady state error (about 0,36%) compared to the error of an output voltage controlled only by a proportional controller (about 4% error).

## Claims

1. A controlled charge pump arrangement, comprising:
- a clocked charge pump (20) adopted to provide an output voltage (Vout) and comprising a control input (d, D)
- a first feedback control circuit (40) coupled to said control input and comprising a proportional signal transfer characteristics;
- a second feedback control circuit (30) coupled to said control input (d, D) and comprising an integrating signal transfer characteristics; and
- a switching circuit (50) adopted to reset the second feedback control circuit (30) in dependence of a comparison of the output voltage (Vout) with a first reference voltage (Voref).

2. The charge pump arrangement according to claim 1, wherein each of the first and second feedback control circuits (30, 40) comprise a controlled path (M1, M2), a first terminal of each controlled path (M1, M2) connected to a ground potential and a second terminal of each controlled path (M1, M2) coupled to said control input (d, D).

3. The charge pump arrangement according to any of claims 1 to 2, wherein the second feedback control circuit (30) comprises a differential amplifier (31) adopted to compare the output voltage (Vout) with a second reference voltage (Vref) and a capacitor (36) connected to an output of the differential amplifier (31).

4. The charge pump arrangement according to any of claims 1 to 3, further comprising:
- a start-up circuit (60) being in effective connection with the first and second feedback control circuit (40, 30) and adopted to selectively switch on at least one of the first and second feedback control circuit (40, 30) in dependence of the output voltage.

5. The charge pump arrangement according to any of claims 1 to 4, wherein the first feedback circuit (40) comprises a first differential amplifier (41) and the second feedback circuit (30) comprises a second amplifier (31), wherein the first differential amplifier (41) comprises a larger bandwidth but smaller gain than the second differential amplifier (31).

6. The charge pump arrangement according to any of claims 1 to 5, further comprising a switch (71), said switch being adopted to couple the control input (d, D) with first and second feedback circuits (40, 30) in a first clock phase or with a logic level in a second clock phase.

7. A controlled charge pump arrangement, comprising:
- a clocked charge pump (20) comprising a plurality of control inputs (d, D, a, A, b, B) and adopted to provide an output signal (Vout) in response to control signals at the control inputs;
- at least one of said control inputs (d, D') coupled to a control circuit;
- said control circuit comprising a first controller (40) and a second controller (30);
wherein
- said first controller (40) is adopted to provide a first signal proportional to a first error signal,
- said second controller (30) is adopted to provide a second signal derived by a temporal integration of a second error signal,
- said first and second error signals are derived by a comparison of the output signal with a reference signal,
- the clocked charge pump (20) is adopted to provide at least two different output voltage modes in response to signals at the control inputs, and
- the second controller (30) is adopted to be reset in response to a switching process between the at least two different output voltage modes.

8. The charge pump arrangement according to claim 7, wherein the second controller (30) comprises a transistor (M2) to provide the second signal and a capacitor (36) with selectable capacitance coupled to the transistor to adjust an integration time constant.

9. The charge pump arrangement according to claim 7 or 8, wherein the second controller (30) comprises a reset terminal to reset the second controller (30) in response to a first reset signal and a comparison of the output signal (Vout) with a first reference signal (Voref).

10. The charge pump arrangement according to any of claims 7 to 9, wherein each of the first and second controller (40, 30) comprise a comparator circuit (41, 31) being adopted to compare the output signal (Vout) with a second reference signal (Vref).

11. The charge pump arrangement according to any of claims 7 to 10, wherein the control circuit comprises a switch (71) arranged between the first and second controller (40, 30) and the clocked charge pump (20), said switch adopted to connect the first and second controller (40, 30) to the clocked charge pump (20) in one phase out of two phases of a clock cycle.

12. Method of controlling a regulated clocked charge pump, the clocked charge pump comprising at least one switch, said being operated in subsequent phases of a clock cycle, the method comprising:
- opening the at least one switch during a first phase thereby charging a capacitor up to a supply voltage;
- providing a control signal having a first portion proportional to an error signal and a second portion derived by a temporal integration of the error signal for operating the at least one switch during a subsequent second phase; and
- resetting the second portion of the control signal in dependence of a comparison of an output voltage (Vout) of the charge pump with a reference voltage (Voref).

## Patentansprüche

1. Gesteuerte Ladungspumpenanordnung, Folgendes umfassend:
- eine getaktete Ladungspumpe (20), die eingerichtet ist, eine Ausgangsspannung (Vout) bereitzustellen, und einen Steuereingang (d, D) umfasst;
- eine erste Rückkopplungssteuerschaltung (40), die auf den Steuereingang (d, D) aufgeschaltet ist und eine proportionale Signalübertragungscharakteristik hat;
- eine zweite Rückkopplungssteuerschaltung (30), die auf den Steuereingang (d, D) aufgeschaltet ist und eine integrierende Signalübertragungscharakteristik hat; und
- einen Schaltkreis (50), der dazu geeignet ist, die zweite Rückkopplungssteuerschaltung (30) in Abhängigkeit von einem Vergleich der Ausgangsspannung (Vout) mit einer ersten Bezugsspannung (Voref) rückzusetzen.

2. Ladungspumpenanordnung nach Anspruch 1, wobei die erste und zweite Rückkopplungssteuerschaltung (30, 40) jeweils einen gesteuerten Pfad (M1, M2) umfassen, wobei ein erster Anschluss jedes gesteuerten Pfads (M1, M2) an ein Massepotential angeschlossen ist, und ein zweiter Anschluss jedes gesteuerten Pfads (M1, M2) auf den Steuereingang (d, D) aufgeschaltet ist.

3. Ladungspumpenanordnung nach einem der Ansprüche 1 bis 2, wobei die zweite Rückkopplungssteuerschaltung (30) einen Differenzialverstärker (31), der eingerichtet ist, die Ausgangsspannung (Vout) mit einer zweiten Bezugsspannung (Vref) zu vergleichen, und einen Kondensator (36) umfasst, der an einen Ausgang des Differenzialverstärkers (31) angeschlossen ist.

4. Ladungspumpenanordnung nach einem der Ansprüche 1 bis 3, darüber hinaus umfassend:
- eine Anfahrschaltung (60), die in Wirkverbindung mit der ersten und zweiten Rückkopplungssteuerschaltung (40, 30) steht und eingerichtet ist, selektiv die erste und/oder zweite Rückkopplungssteuerschaltung (40, 30) in Abhängigkeit von der Ausgangsspannung einzuschalten.

5. Ladungspumpenanordnung nach einem der Ansprüche 1 bis 4, wobei die erste Rückkopplungsschaltung (40) einen ersten Differenzialverstärker (41) umfasst, und die zweite Rückkopplungsschaltung (30) einen zweiten Verstärker (31) umfasst, wobei der erste Differenzialverstärker (41) eine größere Bandbreite, aber eine kleinere Verstärkung als der zweite Differenzialverstärker (31) hat.

6. Ladungspumpenanordnung nach einem der Ansprüche 1 bis 5, darüber hinaus einen Schalter (71) umfassend, wobei sich der Schalter dazu eignet, den Steuereingang (d, D) mit der ersten und zweiten Rückkopplungsschaltung (40, 30) in einer ersten Taktphase oder mit einer Logikebene in einer zweiten Taktphase zu verbinden.

7. Gesteuerte Ladungspumpenanordnung, Folgendes umfassend:
- eine getaktete Ladungspumpe (20), die mehrere Steuereingänge (d, D, a, A, b, B) umfasst und eingerichtet ist, ein Ausgangssignal (Vout) im Ansprechen auf Steuersignale an den Steuereingängen bereitzustellen;
- wobei mindestens einer der Steuereingänge (d, D') auf eine Steuerschaltung aufgeschaltet ist;
- wobei die Steuerschaltung eine erste Steuerung (40) und eine zweite Steuerung (30) umfasst;
wobei
- sich die erste Steuerung (40) dazu eignet, ein erstes Signal bereitzustellen, das proportional zu einem ersten Fehlersignal ist,
- sich die zweite Steuerung (30) dazu eignet, ein zweites Signal bereitzustellen, das durch eine zeitliche Integration eines zweiten Fehlersignals abgeleitet ist,
- wobei das erste und zweite Fehlersignal durch einen Vergleich des Ausgangssignals mit einem Bezugssignal abgeleitet werden,
- sich die getaktete Ladungspumpe (20) dazu eignet, mindestes zwei unterschiedliche Ausgangsspannungsarten im Ansprechen auf Signale an den Steuereingängen bereitzustellen, und
- sich die zweite Steuerung (30) dazu eignet, im Ansprechen auf einen Schaltprozess zwischen den mindestens zwei unterschiedlichen Ausgangsspannungsarten rückgesetzt zu werden.

8. Ladungspumpenanordnung nach Anspruch 7, wobei die zweite Steuerung (30) einen Transistor (M2) zum Bereitstellen des zweiten Signals und einen Kondensator (36) mit einer wählbaren Kapazität umfasst, der auf den Transistor zum Einstellen einer Integrationszeitkonstante aufgeschaltet ist.

9. Ladungspumpenanordnung nach Anspruch 7 oder 8, wobei die zweite Steuerung (30) einen Rücksetzanschluss zum Rücksetzen der zweiten Steuerung (30) im Ansprechen auf ein erstes Rücksetzsignal und einen Vergleich des Ausgangssignals (Vout) mit einem ersten Bezugssignal (Voref) umfasst.

10. Ladungspumpenanordnung nach einem der Ansprüche 7 bis 9, wobei die erste und zweite Steuerung (40, 30) jeweils eine Komparatorschaltung (41, 31) umfassen, die eingerichtet ist, das Ausgangssignal (Vout) mit einem zweiten Bezugssignal (Vref) zu vergleichen.

11. Ladungspumpenanordnung nach einem der Ansprüche 7 bis 10, wobei die Steuerschaltung einen Schalter (71) umfasst, der zwischen der ersten und zweiten Steuerung (40, 30) und der getakteten Ladungspumpe (20) angeordnet ist, wobei sich der Schalter dazu eignet, die erste und zweite Steuerung (40, 30) in einer Phase von zwei Phasen eines Taktzyklus an die Ladungspumpe (20) anzuschließen.

12. Verfahren zum Steuern einer geregelten, getakteten Ladungspumpe, wobei die getaktete Ladungspumpe mindestens einen Schalter umfasst, wobei der Schalter in nachfolgenden Phasen eines Taktzyklus betätigt wird, wobei das Verfahren umfasst:
- Öffnen des mindestens einen Schalters während einer ersten Phase, wodurch ein Kondensator auf eine Versorgungsspannung aufgeladen wird;
- Bereitstellen eines Steuersignals mit einem ersten Abschnitt, der proportional zu einem Fehlersignal ist, und einem zweiten Abschnitt, der durch eine zeitliche Integration des Fehlersignals abgeleitet ist, um den mindestens einen Schalter während einer anschließenden zweiten Phase zu betätigen; und
- Rücksetzen des zweiten Abschnitts des Steuersignals in Abhängigkeit von einem Vergleich einer Ausgangsspannung (Vout) der Ladungspumpe mit einer Bezugsspannung (Voref).

## Revendications

1. Agencement de pompe de charge commandée, comprenant:
- une pompe de charge cadencée (20) apte à fournir une tension de sortie (Vout) et comprenant une entrée de commande (d, D);
- un premier circuit de commande de retour (40) couplé à ladite entrée de commande et comprenant des courbes caractéristiques de transfert de signal proportionnel;
- un deuxième circuit de commande de retour (30) couplé à ladite entrée de commande (d, D) et comprenant des courbes caractéristiques de transfert de signal intégrant; et
- un circuit de commutation (50) apte à réinitialiser le deuxième circuit de commande de retour (30) en fonction d'une comparaison de la tension de sortie (Vout) avec une première tension de référence (Voref).

2. L'agencement de pompe de charge selon la revendication 1, sachant que chacun du premier et du deuxième circuit de commande de retour (30, 40) comprend un chemin commandé (M1, M2), une première borne de chaque chemin commandé (M1, M2) étant connectée à un potentiel de terre et une deuxième borne de chaque chemin commandé (M1, M2) étant couplée à ladite entrée de commande (d, D).

3. L'agencement de pompe de charge selon l'une quelconque des revendications 1 à 2, sachant que le deuxième circuit de commande de retour (30) comprend un amplificateur différentiel (31) apte à comparer la tension de sortie (Vout) avec une deuxième tension de référence (Vref) et un condensateur (36) connecté à une sortie de l'amplificateur différentiel (31).

4. L'agencement de pompe de charge selon l'une quelconque des revendications 1 à 3, comprenant en outre:
- un circuit de démarrage (60) qui est en connexion effective avec le premier et le deuxième circuit de commande de retour (40, 30) et apte à mettre en service sélectivement au moins l'un du premier et du deuxième circuit de commande de retour (40, 30) en fonction de la tension de sortie.

5. L'agencement de pompe de charge selon l'une quelconque des revendications 1 à 4, sachant que le premier circuit de retour (40) comprend un premier amplificateur différentiel (41) et le deuxième circuit de retour (30) comprend un deuxième amplificateur (31), sachant que le premier amplificateur différentiel (41) comprend une largeur de bande plus grande mais un gain plus petit que le deuxième amplificateur différentiel (31).

6. L'agencement de pompe de charge selon l'une quelconque des revendications 1 à 5, comprenant en outre un commutateur (71), ledit commutateur étant apte à coupler l'entrée de commande (d, D) avec le premier et le deuxième circuit de retour (40, 30) dans une première phase d'horloge ou avec un niveau logique dans une deuxième phase d'horloge.

7. Agencement de pompe de charge commandée, comprenant:
- une pompe de charge cadencée (20) comprenant une pluralité d'entrées de commande (d, D, a, A, b, B) et apte à fournir un signal de sortie (Vout) en réponse à des signaux de commande au niveau des entrées de commande;
- au moins une desdites entrées de commande (d, D') étant couplée à un circuit de commande;
- ledit circuit de commande comprenant une première unité de commande (40) et une deuxième unité de commande (30);
sachant que
- ladite première unité de commande (40) est apte à fournir un premier signal proportionnel à un premier signal d'erreur,
- ladite deuxième unité de commande (30) est apte à fournir un deuxième signal dérivé d'une intégration temporelle d'un deuxième signal d'erreur,
- ledit premier et ledit deuxième signal d'erreur sont dérivés d'une comparaison du signal de sortie avec un signal de référence,
- la pompe de charge cadencée (20) est apte à fournir au moins deux modes de tension de sortie différents en réponse à des signaux au niveau des entrées de commande,
et
- la deuxième unité de commande (30) est apte à être réinitialisée en réponse à un procédé de commutation entre les au moins deux modes de tension de sortie différents.

8. L'agencement de pompe de charge selon la revendication 7, sachant que la deuxième unité de commande (30) comprend un transistor (M2) pour fournir le deuxième signal et un condensateur (36) à capacitance sélectionnable couplée au transistor pour régler une constante de temps d'intégration.

9. L'agencement de pompe de charge selon la revendication 7 ou 8, sachant que la deuxième unité de commande (30) comprend une borne de réinitialisation pour réinitialiser la deuxième unité de commande (30) en réponse à un premier signal de réinitialisation et une comparaison du signal de sortie (Vout) avec un premier signal de référence (Voref).

10. L'agencement de pompe de charge selon l'une quelconque des revendications 7 à 9, sachant que chacune de la première et de la deuxième unité de commande (40, 30) comprend un circuit comparateur (41, 31) qui est apte à comparer le signal de sortie (Vout) avec un deuxième signal de référence (Vref).

11. L'agencement de pompe de charge selon l'une quelconque des revendications 7 à 10, sachant que le circuit de commande comprend un commutateur (71) agencé entre la première et la deuxième unité de commande (40, 30) et la pompe de charge cadencée (20), ledit commutateur étant apte à connecter la première et la deuxième unité de commande (40, 30) à la pompe de charge cadencée (20) dans une phase issue de deux phases d'un cycle d'horloge.

12. Procédé de commande d'une pompe de charge cadencée régulée, la pompe de charge cadencée comprenant au moins un commutateur, ledit commutateur étant manoeuvré dans des phases subséquentes d'un cycle d'horloge, le procédé comprenant:
- l'ouverture de l'au moins un commutateur pendant une première phase, chargeant de ce fait un condensateur jusqu'à une tension d'alimentation;
- la fourniture d'un signal de commande ayant une première partie proportionnelle à un signal d'erreur et une deuxième partie dérivée d'une intégration temporelle du signal d'erreur pour manoeuvrer l'au moins un commutateur pendant une deuxième phase subséquente; et
- la réinitialisation de la deuxième partie du signal de commande en fonction d'une comparaison d'une tension de sortie (Vout) de la pompe de charge avec une tension de référence (Voref).
